# EUROPÄISCHE PATENTSCHRIFT

(11) **EP 2 334 853 B1**
(45) Veröffentlichungstag und Bekanntmachung des Hinweises auf die Patenterteilung: **18.12.2013**
(21) Anmeldenummer: 09778089.4
(22) Anmeldetag: 25.08.2009
(51) Int. Cl.: D01F 2/02

(54) **FUNKTIONELLE CELLULOSISCHE FORMKÖRPER**
FUNCTIONAL CELLULOSIC MOLDINGS
CORPS MOULÉS CELLULOSIQUES FONCTIONNELS

(30) Priorität: 02.09.2008 DE 102008045290
(43) Veröffentlichungstag der Anmeldung: 22.06.2011
(73) Patentinhaber: Ostthüringische Materialprüfgesellschaft für Textil und Kunststoffe mbH, 07407 Rudolstadt (DE)
(72) Erfinder: KOLBE, Axel, 07924 Neuendorf (DE); MARKWITZ, Hardy, 07407 Rudolstadt (DE)
(74) Vertreter: Plate, Jürgen
(86) Internationale Anmeldenummer: PCT/EP2009/006144
(87) Internationale Veröffentlichungsnummer: WO 2010/025858

(56) Entgegenhaltungen:
- EP-A- 2 116 557
- EP-A1- 1 270 776
- WO-A-2008/131720
- WO-A1-02/22924
- DE-A1- 19 934 436
- DATABASE CA [Online] CHEMICAL ABSTRACTS SERVICE, COLUMBUS, OHIO, US; 19. Juni 2006 (2006-06-19), YU, WEIDONG ET AL: "Antibacterial cotton fiber or fabric bonded with zinc salts and its preparation method" XP002570115 gefunden im STN Database accession no. 2006:586554 & CN 1 687 509 A (UNIV DONGHUA [CN]) 26. Oktober 2005 (2005-10-26)
- DATABASE CA [Online] CHEMICAL ABSTRACTS SERVICE, COLUMBUS, OHIO, US; 13. Oktober 2007 (2007-10-13), MATSUI, TOSHIHIKO ET AL: "Solvent compositions for dissolving cellulose" XP002570637 gefunden im STN Database accession no. 1997:650756 & JP 09 255702 A (ASAHI CHEMICAL IND) 30. September 1997 (1997-09-30)

## Beschreibung

Die Erfindung betrifft cellulosische Formkörper mit feinstverteilten Zinkpigmenten, herstellbar nach dem Trocken-Nass-Extrusionsverfahren. Dieses Verfahren führt zu cellulosischen Formkörpern, die gegenüber unmodifizierten Cellulosefasern einen hohen Weißgrad kombiniert mit einer stark erhöhten UV-Lichtabsorption und eine waschpermanente und einstellbare bakterizide Wirkung bei gleichzeitig uneingeschränkter textiler Verarbeitbarkeit aufweisen. Diese cellulosischen Formkörper sind geeignet für alle Formen der textilen Verarbeitung wie Faser- oder Filamentspinnen, Garnherstellung, Färben, Weben, Wirken, Vlieslegung.

Die cellulosischen Funktionsformkörper eignen sich speziell für den Einsatz in Textilien/Flächengebilden für Bekleidung, technische Textilien, Freizeit, Medizin und Kosmetik.

### Stand der Technik

Zinkoxid ist farblos und wird auf Grund der UV-Absorption unterhalb von 380 nm Wellenlängen als UV-Absorber genutzt. Es ist ebenso bekannt, dass Zinkverbindungen bakterizide und fungizide Eigenschaften aufweisen. In Textilien wird dieser Effekt z.B. beschrieben für die Herstellung eines bakteriziden Polyamidfilaments, US 7,074,482, einer bakteriziden PET-Faser, CN1800454, modifizierter Baumwolle, CN1687509, Viskose, JP8060431, Viskose, Polyacrylfasern, PVC-Fasern, CN1442518, Fasern aus thermoplastischer Matrix und Zinksulfid, EP1 560 953.

In der JP 08-060431 A sind Viskose(Rayon)-Fasern beschrieben, die antibakterielle, desodorierende Eigenschaften aufweisen. Die antibakteriellen Eigenschaften werden erzielt durch Vermischen der Viskose mit keramischen Komplexen. Die keramischen Komplexe werden erhalten aus einer Mischung von a) Magnesiumoxid, b) Quartzit oder Zinkoxid und c) Hornblende, Zeolith oder Calciumoxid, die anschließend gebrannt wird. Der maximal mögliche Anteil der antibakteriell wirksamen keramischen Komplexe in der Viskose ist jedoch relativ gering. Bei der Herstellung von Viskosefasern erfolgt die Koagulation und Regeneration der Cellulose stets in sauren Fäll- und Regenerationsbädern.

Gegenstand der DE 198 02 588 A1 sind lumineszierende Fasern, insbesondere lumineszierende Cellulosefasern, die nach dem Viskoseverfahren oder nach dem NMMO-Verfahren hergestellt sein können. Sie enthalten anorganische Leuchtstoff-Pigmente, die bei Anregung mit sichtbarer oder ultravioletter Strahlung vorzugsweise einen Phosphoreszenz-Effekt zeigen. Konkret genannt sind mit Übergangsmetall-Elementen oder Lanthanoid-Elementen dotierte Zinksulfide, Oxide, Oxysulfide, Silikate oder Aluminate. Silberdotierte Zinksulfide zeigen beispielsweise eine blaue Fluoreszenz. Übergangselemente oder Lanthanoid-Elemente können jedoch eine autokatalysierte, stark exotherme Zersetzung des NMMO's bewirken.

In der EP 0 043 325 A1 sind Filtermaterialien aus Celluloseester-Material beschrieben, die Zinksulfid oder Zinkoxid enthalten. Mit den Filtermaterialien können Schwermetallionen, wie Silber, Quecksilber, Blei, Kupfer oder Cadmium aus wässrigen Lösungen herausgefiltert werden. Als Celluloseester sind Cellulose-acetat, -butyrat und -propionat sowie Mischungen davon genannt.

Formkörper, speziell Fasern und Filamente, mit antibakterieller oder antifungaler Wirkung sind in der WO 2004/044284 A1 offenbart. Die Wirkung wird durch einen Gehalt an Zinksulfid erzielt. Der Anteil an Zinksulfid beträgt 0,01 bis 10 Gew.-%, bezogen auf das Gewicht des polymeren Materials, das den Formkörper bildet. Als polymere Materialien sind dabei Polyurethane, Polyester, Polyamide, Acryl-Polymere, Polyolefine, Cellulose oder Celluloseester konkret erwähnt.

In der DE 44 26 966 A1 ist ein Verfahren zur Herstellung von hochgefüllten und orientierten Cellulosefasern und -folien nach einem speziellen Trocken-Nass-Spinnverfahren offenbart. Als Füllstoffe werden feinverteilte Substanzen, beispielsweise Metallpulver oder keramische Stoffe eingesetzt. Der Anteil an Füllstoff kann bis zu mehr als 500 Gew.-%, bezogen auf das Gewicht der Cellulose, betragen.

Schließlich ist in der DE 10 2007 019 768 A1 ein Verfahren zur Herstellung von antibakteriell ausgerüsteten Cellulosefasern mit hohem Weißgrad offenbart. Die Fasern werden nach einem Lyocell-Verfahren hergestellt. Die antibakterielle Wirkung wird durch den Zusatz von silberhaltigen Nanopartikeln erreicht.

Jedoch führen alle beschriebenen Verfahren zu Formkörpern, bei denen die Wirkung der Zinkverbindungen sich mit der Anzahl der Wäschen stark verringert und oft ist bei hohen Konzentrationen an Zinkverbindungen eine textile Verarbeitung stark eingeschränkt.

### Aufgabe der Erfindung

Der Erfindung liegt die Aufgabe zugrunde, einen permanent bakterizid ausgestatteten weißen Celluloseformkörper herzustellen, der ohne Farbeinschränkung färbbar ist. Eine weitere Aufgabe ist, die Freisetzungsrate des Bakterizids zu gestalten. Besonders wichtig ist unter dieser Bedingung eine hohe Waschpermanenz und Erhalt des Weißgrades bei Belichtung. Eine weitere Aufgabe besteht darin, trotz hohem Pigmentgehalt die textilen Parameter nicht oder nur geringfügig zu beeinträchtigen. Die Formkörper sollen zudem eine hohe UV-Absorption zeigen.

Diese Aufgabe wird erfindungsgemäß mit einem cellulosischen Formkörper mit hohem Weißgrad und antibakteriellen Eigenschaften gelöst, der zinkhaltige Pigmente enthält und dadurch gekennzeichnet ist, daß wenigstens ein Teil des Zinks der zinkhaltigen Pigmente in Form von Zinkaten vorliegt und an die Cellulose gebunden ist.

Cellulosische Formkörper, die eine Mischung oder Mischkristalle von Zinkoxid (Zinkweiß) und Zinksulfid enthalten, zeigen dabei besonders ausgeprägte antibakterielle Eigenschaften.

Der erfindungsgemäße cellulosische Formkörper, speziell die erfindungsgemäße Cellulose-Faser, sind uneingeschränkt färbbar, zeigen eine hohe UV-Absorption, hohe Waschpermanenz, d.h. die antibakteriellen Eigenschaften gehen auch nach vielen Wäschen nicht verloren, sowie uneingeschränkte textile Verarbeitbarkeit.

Erhältlich ist der cellulosische Formkörper aus einer cellulosischen Form- und Spinnlösung, die mit wasserunlöslichen Zinkpigmenten vermischt ist und einen pH-Wert von 7 oder mehr aufweist, wobei die Mischung in einem Trocken-Nass-Extrusionsverfahren zu dem Formkörper geformt und die Cellulose in einem wässrigen Fällbad ausgefällt wird.

Wichtig ist, daß der Formkörper nach einem Verfahren hergestellt ist, bei dem neutrale oder basische Bedingungen herrschen, nicht dagegen saure. Nur dann wird Zink auf der Oberfläche der Zinkpigmente in Zinkat-Anionen umgewandelt, die besonders fest an die Cellulose angebunden sind. Das Zink wird dann nur sehr langsam wieder abgegeben. So ausgerüstete Fasern können ohne weiteres 50mal gewaschen werden, ohne die bakterizide Wirkung zu verlieren. Als Zinkate werden dabei Anionen der (nur theoretisch existenten) Oxo- und Hydroxosäuren des Zinks bezeichnet, wie ZnO₂²⁻ oder Zn(OH)₃⁻.

Die Zinkpigmente haben vorzugsweise eine maximale Partikelgröße von weniger als 15 µm. Besonders bevorzugt sind zinkbasierende Weißpigmente, wie sauerstoffbasierendes Zinkweiß, ZnO; daneben auch Zinksulfid. Die Zinkpigmente können einzeln oder in Kombination eingesetzt werden.

Besondere Vorteile bietet dabei die Kombination von Zinkoxid- mit Zinksulfid-Pigmenten.

Der Anteil des bzw. der Zinkpigmente beträgt allgemein 0,1 bis 30 Gew.%, bevorzugt 1 bis 25 Gew.-%, besonders bevorzugt 5 bis 20 Gew.-%, jeweils bezogen auf das Gewicht der Cellulose. Die Einarbeitung von Zinksulfid lässt das Endprodukt jedoch häufig leicht grünstichig erscheinen.

Die Spinnlösung ist beispielsweise erhältlich durch Lösen von Cellulose in tertiärem vorzugsweise Wasser. Daneben können auch ionische Flüssigkeiten als Lösungsmittel für die Cellulose bei der Herstellung der Spinnlösung verwendet werden.

In beiden Verfahren werden die Cellulose-Formkörper nach dem Trocken-Nass-Extrusionsprozess hergestellt, die auch bei hohem Pigmentgehalt eine textil verarbeitbare Faser mit einem hohen Weißgrad und einer uneingeschränkten Färbbarkeit, vergleichbar mit klassischen Cellulosefasern, zugänglich macht.

Bei cellulosischen Formkörpern, die unter Verwendung von Viskose hergestellt sind, bildet sich keine Zinkathülle und das Zink ist dementsprechend sehr viel schwächer an die Cellulose gebunden. Die bakterizide Wirkung lässt daher bereits nach wenigen Wäschen stark nach (geringe Waschpermanenz).

Hohe textil-physikalische Werte und eine textile Verarbeitbarkeit sind gewährleistet bei einem Anteil an Zinkpigmenten bis zu 30% (w/w) des Cellulosegewichts. Für Vliesanwendungen sind auch höhere Füllgrade möglich. Die in der Literatur beschriebene bakterizide Wirkung von Zinkweiß konnte auch in den erfindungsgemäßen Celluloseformkörpern nachgewiesen werden. Für eine Anwendung in textilen Einmalanwendungen ist diese Wirkung ausreichend. Jedoch für vielfach gewaschene Textilien, wie Ober- oder Untertrikotagen, sinkt die Freisetzung von löslichem Zink mit den Wäschen ab, obwohl noch genügend Zinkweiß in den Fasern vorhanden ist. Völlig überraschend konnte dieser Mangel herkömmlicher zinkbasierender Fasern durch die Kombination von Cellulose und einer Mischung von Zinkweiß und Zinksulfid überwunden werden. Bei Verwendung von Zinkweiß und Zinksulfid in einer cellulosischen Faser wird durch die Quellfähigkeit der Cellulose eine längerandauernde erhöhte Freisetzung beobachtet, da der gesamte Querschnitt des Formkörpers Wasser zugänglich ist und damit alle inkorporierten Pigmente an der Zinkfreisetzung beteiligt sind. Die Anzahl der Wäschen, die ohne Verlust der bakteriziden Eigenschaften durchgeführt werden können, erhöht sich deutlich.

In Eluaten der pigmenthaltigen Formkörper konnte Sulfat nachgewiesen werden. Damit wurde eine Autoxidation von Zinksulfidanteilen zu Zinksulfat in der Cellulosematrix nachgewiesen. Durch die dramatisch erhöhte Löslichkeit wird das Sulfat bei der nächsten Wäsche aus dem Formkörper ausgewaschen und trägt signifikant zur bakteriziden Wirkung bei. Aber erst die Kombination von Zinkweiß und Zinksulfid führt überraschenderweise zur gesuchten Kombination zwischen Waschpermanenz und bakterizider Wirkung der Faser über den Lebenszyklus der Textilfaser. Das stabilere Zinkweiß und das geringer stabile Zinksulfid ergänzen sich hervorragend und führen zusammen zu einer ausreichenden Zinkionenfreisetzung über mindestens 50 Maschinenwäschen. Gleichzeitig werden die textil-physikalischen Parameter des Formkörpers auch bei hohem Pigmentgehalt nicht oder nur geringfügig beeinträchtigt. Besonders homogen verteilte feine Zinkpigmente können in Konzentration unter 5 % (w/w) sogar zu einer Verbesserung der Festigkeit führen. Dieser Effekt eröffnet den Zugang zu einem neuen Produkt, dem weißen, voli färbbaren Celluloseformkörper mit einstellbarer bakteriostatischer - bakterizider Wirkung, die über viele Wäschen biologisch aktiv bleibt und der gleichzeitig eine UV-Absorption aufweist und dessen textile Verarbeitbarkeit auch bei hohem Pigmentgehalt gegeben ist.

Entsprechend der Anwendung sind folgende Zusammensetzungen vorstellbar:
In Einmalanwendungen, wie Wundauflagen, Pflaster, Hygieneprodukte, kosmetische Anwendungen, Schuhinnensohlen, Wegwerffilter können Cellulosefasern mit reinem Zinkweiß oder reinem Zinksulfid entsprechend der Nutzungsdauer verwendet werden, es sind aber auch Mischungen von z.B. 0,5-5% Zinksulfid und 95-99,5% Zinkweiß vorstellbar.

Bei Anwendungen mit 1-5 Wäschen, wie Schuhinnenfutter, Matratzenstoff, Wohntextilien, Futterstoffe, Textilien im Fahrzeuginnenraum sind Mischungen aus 0-50% Zinksulfid und 50-100 % Zinkweiß vorstellbar.

Für Anwendungen mit mehr als 5 Wäschen und für Produkte im Außenbereich sind Mischungen zwischen 0- 90 % Zinksulfid und 10 - 100 % Zinkweiß vorstellbar.

Freisetzungsrate und Waschpermanenz können durch das Verhältnis an Zinkweiß zu Zinksulfid eingestellt werden.

Besonders im Außenbereich ist diese Faser hervorragend einzusetzen, da sie eine effektive UV-Absorption durch die Zinkpigmente aufweist.

Durch die Freisetzung aus den Zinkpigmenten können nicht nur Textilien aus reinen zinkpigmenthaltigen Cellulosefasern hergestellt werden, sondern auch Abmischungen zwischen 1 und 100%, bevorzugt 5 bis 20 % erfindungsgemäßer Faseranteil am Gesamttextil. Dabei ist ein Gesamtanteil von Zinkpigmenten im Textil von 0,1 bis 20 % vorstellbar und sinnvoll.

## Patentansprüche

1. Cellulosischer Formkörper mit hohem Weißgrad und antibakteriellen Eigenschaften, der zinkhaltige Pigmente enthält, **dadurch gekennzeichnet, dass** die zinkhaltigen Pigmente aus Zinkweiß, Zinksulfid oder einer Mischung daraus bestehen und dass wenigstens ein Teil des Zinks der zinkhaltigen Pigmente in Form von Zinkaten vorliegt und an die Cellulose angebunden ist, mit der Maßgabe, dass die Cellulose nicht enzymatisch mit Cellulasen vorbehandelt ist.

2. Formkörper nach Anspruch 1, **dadurch gekennzeichnet, dass** als zinkhaltige Pigmente eine Mischung oder Mischkristalle von Zinkweiß und Zinksulfid verwendet werden.

3. Formkörper nach Anspruch 1 oder 2, **dadurch gekennzeichnet, dass** die zinkhaltigen Pigmente eine Partikelgröße von kleiner 15 µm aufweisen.

4. Formkörper nach Anspruch 1, **dadurch gekennzeichnet, dass** der Anteil zinkhaltiger Pigmente im Formkörper 0,1 bis 30 Gew.-%, bevorzugt 1 bis 25 Gew.-%, besonders bevorzugt 5 bis 20 Gew.-%, beträgt, jeweils bezogen auf das Gewicht der Cellulose, in Vliesstoffanwendungen auch mehr als 30 Gew.- %.

5. Formkörper nach Anspruch 1, **dadurch gekennzeichnet, dass** die Wirkung der Zinkpigmente auch nach 50 Wäschen gegeben ist.

6. Formkörper nach Anspruch 1, **dadurch gekennzeichnet, dass** die Freisetzungsrate und Waschpermanenz durch das Verhältnis von Zinkweiß zu Zinksulfid bestimmt sind.

7. Verwendung der funktionellen cellulosischen Formkörper mit hohem Weißgrad, uneingeschränkter Färbbarkeit, UV-Absorption und waschpermanenter bakterizider Wirkung gemäß einem oder mehreren der Ansprüche 1 bis 6 in funktionellen Textilien, Vliesen und Folien.

8. Verwendung nach Anspruch 7, **dadurch gekennzeichnet, dass** die zinkpigmenthaltigen Formkörper, rein oder in Beimischungen, zu Textilien und Dingen des täglichen Bedarfs verarbeitet werden.

## Claims

1. A cellulosic molding having high whiteness and antibacterial properties, which contains zinc-containing pigments, **characterized in that** the zinc-containing pigments consist of zinc white, zinc sulphide or a mixture thereof and **in that** at least some of the zinc of the zinc-containing pigments is present in the form of zincates and is attached to the cellulose, with the proviso that the cellulose has not been enzymatically pretreated with cellulases.

2. The molding according to claim 1, **characterized in that** the zinc-containing pigments used comprise a mixture or mixed-crystals of zinc white and zinc sulfide.

3. The molding according to claim 1 or 2, **characterized in that** the zinc-containing pigments have a particle size of below 15 µm.

4. The molding according to claim 1, **characterized in that** the proportion of zinc-containing pigments in the molding is in the range from 0.1 % to 30 % by weight, preferably in the range from 1 % to 25 % by weight and more preferably in the range from 5 % to 20 % by weight, all based on the weight of the cellulose, but also more than 30 % by weight in nonwoven applications.

5. The molding according to claim 1, **characterized in that** the effect of the zinc pigments is present even after 50 washes.

6. The molding according to claim 1, **characterized in that** the release rate and wash durability are determined by the ratio of zinc white to zinc sulfide.

7. The use of the functional cellulosic moldings having high whiteness, unrestricted dyeability, UV absorbance and wash-durable bactericidal performance according to one or more of claims 1 to 6 in functional textiles, fibrous nonwoven webs and self-supporting films/sheets.

8. The use according to claim 7, **characterized in that** the zinc pigment-containing moldings are processed straight or in admixtures into textiles and articles of everyday use.

## Revendications

1. Corps moulé cellulosique qui présente un degré de blancheur élevé et des propriétés antibactériennes et qui contient des pigments contenant du zinc, **caractérisé en ce que** les pigments contenant du zinc sont constitués de blanc de zinc, de sulfure de zinc ou d'un mélange de ceux-ci et **en ce qu'**au moins une partie du zinc des pigments contenant du zinc est présente sous forme de zincates et est liée à la cellulose, la cellulose n'ayant pas subi au préalable un traitement enzymatique avec des cellulases.

2. Corps moulé selon la revendication 1, **caractérisé en ce que**, comme pigments contenant du zinc, on utilise un mélange ou des cristaux mixtes de blanc de zinc et de sulfure de zinc.

3. Corps moulé selon la revendication 1 ou 2, **caractérisé en ce que** les pigments contenant du zinc ont une dimension de particule inférieure à 15 µm.

4. Corps moulé selon la revendication 1, **caractérisé en ce que** la part de pigments contenant du zinc dans le corps moulé est de 0,1 à 30 % en poids, de manière préférée de 1 à 25 % en poids, de manière particulièrement préférée de 5 à 20 % en poids, à chaque fois par rapport au poids de la cellulose, cette part pouvant être de plus de 30 % en poids dans des applications dans le domaine des non-tissés.

5. Corps moulé selon la revendication 1, **caractérisé en ce que** l'action des pigments de zinc persiste même après 50 lavages.

6. Corps moulé selon la revendication 1, **caractérisé en ce que** le taux de libération et la permanence au lavage sont déterminés par le rapport du blanc de zinc au sulfure de zinc.

7. Utilisation des corps moulés cellulosiques fonctionnels ayant un degré de blancheur élevé, des possibilités de teinture illimitées, une absorption d'UV et une action bactéricide résistant au lavage selon une ou plusieurs des revendications 1 à 6 dans des textiles, non-tissés et feuilles fonctionnels.

8. Utilisation selon la revendication 7, **caractérisée en ce que** les corps moulés qui contiennent des pigments contenant du zinc, purs ou en mélanges, sont traités pour donner des textiles et des objets de la vie quotidienne.
